# EUROPÄISCHE PATENTSCHRIFT

(11) **EP 2 750 947 B1**
(45) Veröffentlichungstag und Bekanntmachung des Hinweises auf die Patenterteilung: **10.06.2015**
(21) Anmeldenummer: 12756419.3
(22) Anmeldetag: 29.08.2012
(51) Int. Cl.: B60T 11/20

(54) **HAUPTBREMSZYLINDER FÜR EINE HYDRAULISCHE FAHRZEUGBREMSANLAGE**
MASTER BRAKE CYLINDER FOR A HYDRAULIC VEHICLE BRAKE SYSTEM
MAÎTRE-CYLINDRE DE FREIN POUR UN SYSTÈME DE FREINAGE HYDRAULIQUE

(30) Priorität: 31.08.2011 DE 102011081872
(43) Veröffentlichungstag der Anmeldung: 09.07.2014
(73) Patentinhaber: Robert Bosch GmbH, 70442 Stuttgart (DE)
(72) Erfinder: PFLUEGER, Nico, 68723 Schwetzingen (DE); SCHLICHENMAIER, Andreas, 74336 Brackenheim-Meimsheim (DE); MASUR, Dagobert, 74388 Talheim (DE)
(86) Internationale Anmeldenummer: PCT/EP2012/066717
(87) Internationale Veröffentlichungsnummer: WO 2013/030201

(56) Entgegenhaltungen:
- EP-A2- 0 882 633
- WO-A1-2011/085836
- DE-A1- 10 233 838

## Beschreibung

Die Erfindung betrifft einen Hauptbremszylinder für eine hydraulische Fahrzeugbremsanlage mit den Merkmalen des Oberbegriffs des Anspruchs 1.

### Stand der Technik

Die Offenlegungsschrift DE 102 33 838 A1 offenbart einen Hauptbremszylinder für eine elektrohydraulische Fahrzeugbremsanlage, d.h. eine Fremdkraft-Bremsanlage, bei der ein Bremsdruck nicht mit dem Hauptbremszylinder, sondern mit einer Hydropumpe, die von einem Elektromotor angetrieben wird, erzeugt wird. Der Hauptbremszylinder dient als Sollwertgeber für den mit Fremdenergie zu erzeugenden Bremsdruck, er wird durch Schließen eines Trennventils hydraulisch von der Fahrzeugbremsanlage getrennt, wenn der Bremsdruck mit der Hydropumpe erzeugt wird. Lediglich bei Ausfall der Hydropumpe bleibt der bekannte Hauptbremszylinder hydraulisch mit der Fahrzeugbremsanlage verbunden und erzeugt den Bremsdruck.

Der bekannte Hauptbremszylinder weist einen ersten Kolben auf, der zur Druckerzeugung mit Muskelkraft im Hauptbremszylinder verschiebbar ist. Ein zweiter Kolben ist rohrförmig, er umschließt den ersten Kolben und wird nach einem vorgegebenen Verschiebeweg des ersten Kolbens von einer Mitnehmereinrichtung mit dem ersten Kolben mitbewegt. Des weiteren weist der bekannte Hauptbremszylinder einen Hydrospeicher als Pedalwegsimulator auf, der mit dem Hauptbremszylinder kommuniziert und in den der erste und ggf. der zweite Kolben Bremsflüssigkeit verdrängen, wenn der Hauptbremszylinder durch Schließen des Trennventils hydraulisch von der Fahrzeugbremsanlage getrennt ist.

Weil der erste Kolben allein pro Kolbenweg weniger Bremsflüssigkeit aus dem Hauptbremszylinder verdrängt als die beiden Kolben zusammen genügt ein kleinerer Hydrospeicher als Pedalwegsimulator. Bei Ausfall der Hydropumpe stehen nach Zurücklegen des vorgegebenen Kolbenwegs, ab dem sich der zweite Kolben mit dem ersten Kolben mitbewegt, die Kolbenflächen beider Kolben zur Verfügung, um ein ausreichendes Bremsflüssigkeitsvolumen zur Betätigung der hydraulischen Fahrzeugbremsanlage bei Ausfall der Hydropumpe aus dem Hauptbremszylinder zu verdrängen.

### Offenbarung der Erfindung

Der erfindungsgemäße Hauptbremszylinder mit den Merkmalen des Anspruchs 1 weist einen ersten und einen zweiten Kolben auf, die in dem Hauptbremszylinder verschiebbar sind. Angetrieben, d.h. mit Muskelkraft verschoben wird der erste Kolben, der zweite Kolben wird von einer Mitnehmereinrichtung mit dem ersten Kolben mitbewegt, wenn der erste Kolben um einen vorgegebenen Verschiebeweg in einer Betätigungsrichtung in Bezug auf den zweiten Kolben verschoben worden ist. Die Betätigungsrichtung beider Kolben ist die Verschieberichtung im Hauptbremszylinder, durch die Bremsflüssigkeit aus dem Hauptbremszylinder in angeschlossene hydraulische Fahrzeugbremsanlage verdrängt und ein Bremsdruck aufgebaut wird.

Beide Kolben beaufschlagen denselben Bremskreis und es wird der zweite Kolben von dem Druck beaufschlagt, den der erste Kolben erzeugt. Der zweite Kolben darf nicht mit einem Schwimm- oder Sekundärkolben bekannter Zweikreis-Hauptbremszylinder verwechselt werden, der Druck in einem zweiten Bremskreis erzeugt. Der erfindungsgemäße Hauptbremszylinder kann als Zweikreis- oder Mehrkreis-Hauptbremszylinder ausgebildet sein und einen, theoretisch auch mehrere Schwimm- oder Sekundärkolben zusätzlich zum ersten und zweiten Kolben aufweisen.

Der zweite Kolben des erfindungsgemäßen Hauptbremszylinders ist über seine Ausgangsstellung hinweg entgegen der Betätigungsrichtung im Hauptbremszylinder verschiebbar. Die Ausgangsstellung ist die Stellung, die der zweite Kolben bei nicht betätigtem und drucklosem Hauptbremszylinder einnimmt. Eine Stützfeder stützt den zweiten Kolben gegen eine Verschiebung entgegen der Betätigungsrichtung über die Ausgangsstellung hinweg ab.

Zu einer Betätigung des Hauptbremszylinders und einer Bremsbetätigung wird der erste Kolben durch Muskelkraft in der Betätigungsrichtung im Hauptbremszylinder verschoben. Er verdrängt Bremsflüssigkeit in die angeschlossene hydraulische Fahrzeugbremsanlage und erzeugt einen Bremsdruck. Der zweite Kolben wird von dem Druck beaufschlagt, den der erste Kolben erzeugt. Der zweite Kolben bewegt sich dadurch aus seiner Ausgangsstellung entgegen der Betätigungsrichtung. Gegen die Verschiebung stützt ihn die Stützfeder ab, die dadurch gespannt wird.

Ein Vorteil der Erfindung ist, dass der zweite Kolben Druckänderungen dämpft, wie sie beispielsweise in schlupfgeregelten hydraulischen Fahrzeugbremsanlagen während einer Schlupfregelung durch eine pulsierende Förderung einer üblicherweise als Kolbenpumpe ausgeführte Rückförderpumpe und durch Schalten von Magnetventilen zur radindividuellen Radbremsdruckregelung entstehen. Solche Druckänderungen während einer Schlupfregelung sind als Vibrationen an einem Bremspedal deutlich spürbar und werden durch den erfindungsgemäßen zweiten Kolben gedämpft.

Ein zweiter Vorteil der Erfindung ist ein Schutz der hydraulischen Fahrzeugbremsanlage vor Überdruck, wobei mit "Überdruck" ein Druck gemeint ist, der über einem maximalen Auslagedruck der Fahrzeugbremsanlage liegt und die Fahrzeugbremsanlage beschädigen kann. Durch die Mitbewegung des zweiten Kolbens mit dem ersten Kolben nach Verschieben des ersten Kolbens in Bezug auf den zweiten Kolben in der Betätigungsrichtung um den vorgegebenen Verschiebeweg werden Kolbenflächen beider Kolben wirksam, d.h. die wirksame Kolbenfläche ist um die Kolbenfläche des zweiten Kolbens vergrößert, wodurch der mit einer bestimmten, auf die beiden Kolben ausgeübten Muskelkraft erzeugte Druck verkleinert ist. Bei korrekter Auslegung lässt sich die hydraulische Fahrzeugbremsanlage nicht durch Muskelkraftbetätigung des Hauptbremszylinders beschädigen.

Ein dritter Vorteil der Erfindung in diesem Zusammenhang besteht darin, dass im Fall einer notwendigen Bremsdruckbegrenzung kein zusätzliches Volumen freigegeben wird, wie es beispielsweise bei Hydrospeichern oder sogenannten "By-pass"-Ventilen der Fall ist. Der erfindungsgemäße Hauptbremszylinder verhindert somit, dass im Fall einer Druckbegrenzung das Bremspedal maximal weit betätigt werden kann. Die sich am Bremspedal einstellende hohe Gegenkraft vermittelt dem Fahrer ein "direkteres" und souveränes Bremsgefühl.

Weitere Fälle, in dem der erfindungsgemäße Hauptbremszylinder die angeschlossene hydraulische Fahrzeugbremsanlage vor Überdruck schützen kann, ist eine Vollbremsung im direkten Anschluss an eine Schlupfregelung oder eine schlagartige Erhöhung einer Griffigkeit eines Untergrunds mindestens eines Fahrzeugsrads während einer Schlupfregelung, d.h. ein sog. negativer µ-Sprung. In beiden Fällen wird ein hoher Druck im Hauptbremszylinder erzeugt, gegen den eine Hydropumpe, die sog. Rückförderpumpe, Bremsflüssigkeit fördert. Durch seine Verschiebbarkeit entgegen der Betätigungsrichtung ermöglicht der zweite Kolben die zumindest vorrübergehende Aufnahme von Bremsflüssigkeit im Hauptbremszylinder, was einen sprungartigen Druckanstieg dämpft und eine Druckspitze vermeidet, was die hydraulische Fahrzeugbremsanlage gegen Beschädigung durch Überdruck schützt.

Der erfindungsgemäße Hauptbremszylinder ist für eine Muskelkraft-Fahrzeugbremsanlage, also für eine Betätigung einer Fahrzeugbremsanlage mit Muskelkraft, vorgesehen. Vorzugsweise ist der erfindungsgemäße Hauptbremszylinder ohne Unterdruck-, elektromechanischen-, pneumatischen- oder dgl. Bremskraftverstärker vorgesehen. Allerdings ist ein Bremskraftverstärker nicht grundsätzlich ausgeschlossen, d. h. der erfindungsgemäße Hauptbremszylinder kann auch in einer Hilfskraft-Fahrzeugbremsanlage Verwendung finden. Auch kann ein mechanisches Getriebe mit einer veränderlichen Übersetzung zur Betätigung des Hauptbremszylinders vorgesehen sein. Ein solches mechanisches Getriebe kann beispielsweise ein Hebelgetriebe und/oder ein Kurvengetriebe aufweisen, das durch seine Formgebung und/oder Geometrie eine Übersetzung von einem Bremspedal zum ersten Kolben des Hauptbremszylinders abhängig vom Pedalweg und damit vom Verschiebeweg des ersten Kolben ändert. Eine Kraftübersetzung eines solchen mechanischen Getriebes wird sinnvollerweise degressiv gewählt, d.h. so, dass eine Kraftübersetzung mit zunehmendem Pedalweg kleiner wird.

Insbesondere ist der erfindungsgemäße Hauptbremszylinder für Hybrid- oder Elektrofahrzeuge oder allgemein für Kraftfahrzeuge vorgesehen, die rekuperativ bremsen. Beim rekuparativen Bremsen wird eine oder werden mehrere elektrische Maschinen als Generator betrieben, ihr Bremsmoment verzögert das Fahrzeug, der im Generatorbetrieb erzeugte Strom wird gespeichert und steht für einen Fahrzeugantrieb zur Verfügung. Die elektrische Maschine ist üblicherweise ein oder sind mehrere Elektro-Antriebsmotoren, der/die zum Bremsen wie gesagt als Generator betrieben wird bzw. werden. Eine mit der Fahrzeugbremsanlage aufzubringende Bremskraft verringert sich um die Verzögerungswirkung der elektrischen Maschine im Generatorbetrieb und ebenso verringert sich ein Bremsflüssigkeitsvolumen, das zur Erzeugung der Bremskraft aus dem Hauptbremszylinder verdrängt werden muss. Weil sich der zweite Kolben bei Betätigung des erfindungsgemäßen Hauptbremszylinders entgegen der Betätigungsrichtung verschiebt und auf diese Weise einen Teil des vom ersten Bremskolben verdrängten Bremsflüssigkeitsvolumens aufnimmt, ist ein Hydrospeicher als Pedalwegsimulator, in den Bremsflüssigkeit aus dem Hauptbremszylinder verdrängt werden kann, entbehrlich.

Ein weiterer Vorteil der Erfindung ist, dass die beiden Kolben mit demselben Druck beaufschlagt werden und deswegen die Mitnehmereinrichtung in einem Gleichgewichtszustand der beiden Kolben wirksam wird: Es tritt keine sprungartige Krafterhöhung auf, wenn der erste Kolben in Bezug auf den zweiten Kolben den vorgegebenen Verschiebeweg zurückgelegt hat und über die Mitnehmereinrichtung beginnt, den zweiten Kolben mitzubewegen. Ab diesem Punkt ist zwar der Kraftanstieg größer, weil zusätzlich zur Kolbenfläche des ersten Kolbens die Kolbenfläche des zweiten Kolbens wirksam wird, die Kraft steigt jedoch nicht sprunghaft an.

Die Unteransprüche haben vorteilhafte Ausgestaltungen und Weiterbildungen der im Anspruch 1 angegebenen Erfindung zum Gegenstand.

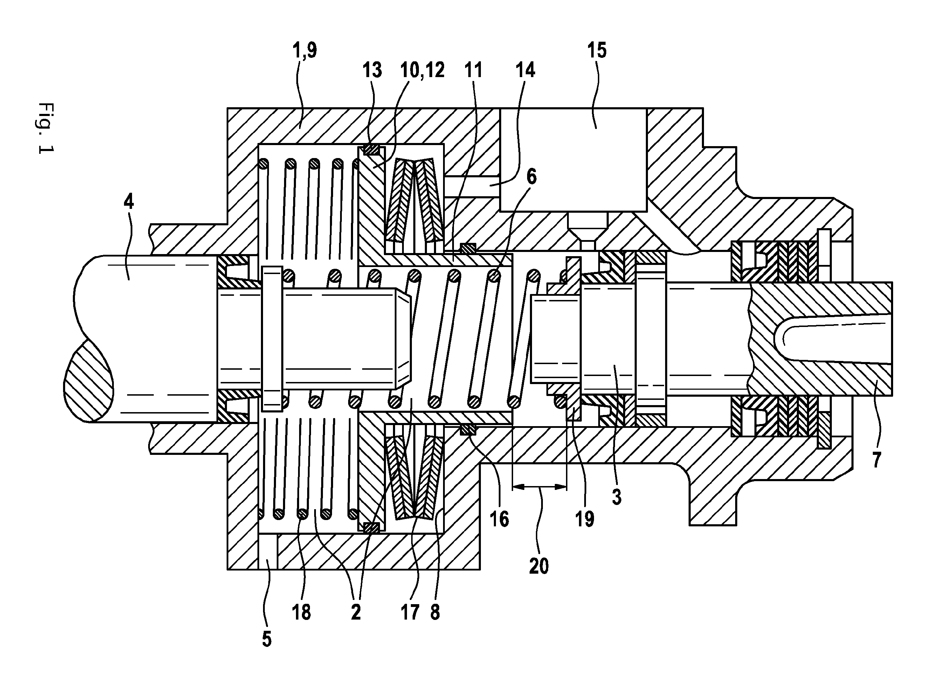

### Kurze Beschreibung der Zeichnung

Die Erfindung wird nachfolgend anhand eines in der Zeichnung dargestellten Ausführungsbeispiels näher erläutert. Die einzige Figur zeigt einen Achsschnitt eines erfindungsgemäßen Hauptbremszylinders in teilweise schematisierter und vereinfachter Darstellung.

### Ausführungsform der Erfindung

Die Zeichnung zeigt einen Achsschnitt eines Zweikreis-Hauptbremszylinders 1 im Bereich eines Druckraums 2 zwischen einem ersten Kolben 3, der auch als Stangenkolben oder Primärkolben bezeichnet werden kann und einem Schwimmkolben 4, der auch als Sekundärkolben bezeichnet wird. An den Druckraum 2 ist ein Bremskreis einer nicht dargestellten, hydraulischen Zweikreis-Fahrzeugbremsanlage anschließbar, der Anschluss für den einen Bremskreis ist mit der Bezugszahl 5 bezeichnet. Ein zweiter, ebenfalls nicht dargestellter Bremskreis der Fahrzeugbremsanlage ist an einem, in der Zeichnung weggebrochenen, nicht gezeichneten Druckraum des Hauptbremszylinders 1 angeschlossen, der vom Schwimmkolben 4 beaufschlagt wird. Die Funktionsweise des Schwimmkolbens 4 eines Zweikreis-Hauptbremszylinders ist bekannt und wird deswegen hier nicht erläutert.

Der Hauptbremszylinder 1 ist zur Verwendung ohne einen Bremskraftverstärker, d.h. in einer Muskelkraft-Bremsanlage vorgesehen, die Verwendung mit einem Bremskraftverstärker, d.h. in einer Hilfskraft-Bremsanlage, ist allerdings nicht ausgeschlossen.

Der Hauptbremszylinder 1 ist grundsätzlich in beliebigen Landfahrzeugen, insbesondere in Kraftfahrzeugen, beispielsweise in herkömmlichen Kraftfahrzeugen mit Verbrennungsmotor verwendbar. Vorgesehen ist die Verwendung des Hauptsbremszylinders 1 allerdings in Hybridfahrzeugen, die einen kombinierten Antrieb mit einem Verbrennungsmotor und einem oder mehreren Elektromotoren aufweisen, oder in einem Elektrofahrzeug. Verallgemeinernd ist die Verwendung des Hauptbremszylinders 1 in Kraftfahrzeugen vorgesehen, die eine elektrische Maschine aufweisen, die beim Bremsen als Generator zur Stromerzeugung benutzt wird und dabei das Fahrzeug verzögert. Der erzeugte Strom wird gespeichert und steht für einen Antrieb des Kraftfahrzeugs zur Verfügung. Die elektrische/n Maschine/n ist/sind normalerweise ein oder mehrere elektrische Antriebsmotoren des Kraftfahrzeugs. Wegen der Verzögerungswirkung der elektrischen Maschine im Generatorbetrieb ist eine Bremskraft der Fahrzeugbremsanlage entsprechend zu verringern, um eine gewünschte Bremswirkung zu erzielen.

Betätigt wird der erfindungsgemäße Hauptbremszylinder 1 durch Verschieben des ersten Kolbens 3 im Hauptbremszylinder 1 in einer Betätigungsrichtung, das ist in der Zeichnung nach links. Durch die Verschiebung in der Betätigungsrichtung verdrängt der erste Kolben 3 Bremsflüssigkeit aus dem Druckraum 2 durch den Anschluss 5 in den angeschlossenen Bremskreis der nicht dargestellten Fahrzeugbremsanlage und erzeugt einen Bremsdruck. Der Druck im Druckraum 2 beaufschlagt eine dem ersten Kolben 3 zugewandte Rückseite des Schwimmkolbens 4, so dass auch der Schwimmkolben 4 in der Betätigungsrichtung im Hauptbremszylinder 1 verschoben wird und dabei Bremsflüssigkeit aus dem nicht gezeichneten, dem Schwimmkolben 4 zugeordneten zweiten Druckraum des Hauptbremszylinders 1 in einen angeschlossenen zweiten Bremskreis der nicht dargestellten Fahrzeugbremsanlage verdrängt und dort ebenfalls einen Bremsdruck erzeugt. Das ist bekannt und soll hier nicht näher erläutert werden. Der erste Kolben 3 stützt sich über eine Rückstellfeder 6, im Ausführungsbeispiel über eine Schraubendruckfeder, am Schwimmkolben 4 ab.

Verschoben wird der erste Kolben 3 in an sich bekannter Weise durch Muskelkraft über ein nicht dargestelltes Bremspedal und eine Pedalstange, die an einer Kolbenstange 7 des Stangenkolbens 3 angreift. Das Bremspedal kann über die Pedalstange direkt an der Kolbenstange 7 angreifen oder über ein nicht dargestelltes mechanisches Getriebe mit veränderlicher Übersetzung. Beispiele mechanischer Getriebe mit veränderlicher Übersetzung sind Hebelgetriebe und Kurvengetriebe. Die Übersetzung und ihre Änderung sind abhängig von einer Geometrie des Getriebes, sie lassen sich durch Wahl der Geometrie des Getriebes einstellen. Eine Kraftübersetzung ist zu Beginn der Betätigung groß und verringert sich mit zunehmender Verschiebung des ersten Kolbens 3.

Der dem ersten Kolben 3 zugeordnete Druckraum 2 vergrößert seinen Durchmesser zwischen dem ersten Kolben 3 und dem Schwimmkolben 4 mit einer Ringstufe 8. In einem mit 9 bezeichneten Abschnitt weist der Druckraum 2 einen größeren Innendurchmesser auf als der erste Kolben 3. Im dargestellten Ausführungsbeispiel ist eine Querschnittsfläche des im Durchmesser größeren Abschnitts 9 des Druckraums 2 doppelt so groß wie eine Kolbenfläche des ersten Kolbens 3, die im Ausführungsbeispiel gleich groß wie eine Kolbenfläche des Schwimmkolbens 4 ist. Diese Durchmesser- und Flächenverhältnisse sind nicht zwingend für die Erfindung. Die Kolbenfläche ist eine zur Druckerzeugung wirksame Fläche der Kolben 3, 4.

Der Hauptbremszylinder 1 weist einen weiteren Schwimmkolben auf, der hier als zweiter Kolben 10 bezeichnet wird. Der zweite Kolben 10, der als Schwimmkolben ausgeführt ist, darf nicht mit dem Schwimm- oder Sekundärkolben 4 zur Beaufschlagung des zweiten Bremskreis verwechselt werden. Der zweite Kolben 10 ist dem ersten-, d.h. Dem Primär- oder Stangenkolben 3 zugeordnet. Der zweite Kolben 10 ist zwischen dem ersten Kolben 3 und dem Schwimmkolben 4 im Druckraum 2 des Hauptbremszylinders 1 angeordnet, der vom ersten Kolben 3 beaufschlagt wird. Der zweite Kolben 10 weist einen rohrförmigen Kragen 11 und eine Lochscheibe 12 nach Art eines Flanschs an einem dem ersten Kolben 3 fernen Ende des Kragens 11 auf. Die Lochscheibe 12 kann auch als der eigentliche zweite Kolben 10 aufgefasst werden. Wegen des rohrförmigen Kragens 11 kann der zweite Kolben 10 auch als rohrförmig angesehen werden. Die Lochscheibe 12 befindet sich im durchmessergrößeren Abschnitt 9 des Druckraums 2 und ist an ihrem Außenumfang mit einer umlaufenden Dichtung 13 abgedichtet. Wenn im Druckraum 2 ein Druck herrscht, ist lediglich eine dem ersten Kolben 3 abgewandte Vorderseite der Lochscheibe 12 des zweiten Kolbens 10 druckbeaufschlagt, eine dem ersten Kolben 3 zugewandte Rückseite ist drucklos. Die Rückseite der Lochscheibe 12 kommuniziert durch einen Durchlass 14 mit einem Anschluss 15 für einen nicht dargestellten, drucklosen Bremsflüssigkeitsbehälter des Hauptbremszylinders 1.

Der rohrförmige Kragen 11 des zweiten Kolbens 10 ist auf dem gleichen Durchmesser im Hauptbremszylinder 1 geführt wie der erste Kolben 3 und dort mit einer umlaufenden Dichtung 16 abgedichtet. Der zweite Kolben 10 ist schwimmend, er ist sowohl in der Betätigungsrichtung als auch in der entgegengesetzten Richtung im Hauptbremszylinder 1 verschiebbar, und zwar ist der zweite Kolben 10 auch über seine dargestellte Ausgangsstellung hinweg entgegen der Betätigungsrichtung im Hauptbremszylinder 1 verschiebbar. Die Ausgangsstellung ist die gezeichnete Stellung, die der zweite Kolben 10 bei nicht betätigtem Hauptbremszylinder 1 und drucklosem Druckraum 2 einnimmt. Gegen eine Verschiebung entgegen der Betätigungsrichtung über die Ausgangsstellung hinweg stützt sich der zweite Kolben 10 mit einer steifen Stützfeder 17 im Hauptbremszylinder 1 ab. Wegen seiner hohen Federsteifigkeit findet im Ausführungsbeispiel ein Tellerfederpaket als Stützfeder 17 zum Abstützen des zweiten Kolbens 10 Verwendung. Allerdings sind andere Arten von Federn als Stützfeder 17 nicht ausgeschlossen. Eine Rückstellfeder 18, im Ausführungsbeispiel eine Schraubendruckfeder, beaufschlagt den zweiten Kolben 10 entgegen der Betätigungsrichtung zurück in seine Ausgangsstellung. Die Rückstellfeder 18 weist eine niedrige Federkraft auf.

Der erste- und Stangenkolben 3 weist einen Mitnehmer 19 in Form eines auf den ersten Kolben 3 aufgesetzten Rings mit L-förmigen Ringquerschnitt auf, der mit dem rohrförmigen Kragen 11 des zweiten Kolbens 10 zusammen wirkt. In der Ausgangsstellung beider Kolben 3, 10 weist der Mitnehmer 19 einen Abstand von einem ihm zugewandten Ende des Kragens 11 auf. Nach einer Verschiebung des ersten Kolbens 3 in der Betätigungsrichtung um den Abstand zwischen dem Mitnehmer 19 und dem Kragen 11, der hier als vorgegebener Verschiebeweg 20 bezeichnet wird, in Bezug auf den zweiten Kolben 10, verschiebt bzw. bewegt der erste Kolben 3 den zweiten Kolben 10 mit in der Betätigungsrichtung. Der Mitnehmer 19 und der rohrförmige Kragen 11 des zweiten Kolbens 10 können auch als Mitnehmereinrichtung 11, 19 aufgefasst werden. Es wird darauf hingewiesen, dass es sich um eine Verschiebung des ersten Kolbens 3 in Bezug auf den zweiten Kolben 10 und nicht um eine absolute Verschiebung des ersten Kolbens 3 im Hauptbremszylinder 1 handelt, weil sich der zweite Kolben 10 entgegen der Betätigungsrichtung verschieben kann, wodurch sich der Verschiebeweg des ersten Kolbens 3 in der Betätigungsrichtung im Hauptbremszylinder 1, nach dem er den zweiten Kolben 10 mit verschiebt, verkürzt.

Wird zur Betätigung des Hauptbremszylinder 1 wie gesagt der erste- und Stangenkolben 3 in der Betätigungsrichtung, d.h. in der Zeichnung nach links verschoben, erzeugt er einen Druck im Druckraum 2. Dieser Druck wirkt auf die Vorderseite der Lochscheibe 12 des zweiten Kolbens 10. Der Druck in der Druckkammer 2 verschiebt den zweiten Kolben 10 aus seiner Ausgangsstellung entgegen der Betätigungsrichtung gegen eine Federkraft der Stützfeder 17. Es wird also ein Teil der vom ersten Kolben 3 verdrängten Bremsflüssigkeit durch die Verschiebung des zweiten Kolbens 10 entgegen der Betätigungsrichtung aufgenommen. Das ist günstig zum Bremsen eines Kraftwagens, der durch Betrieb einer elektrischen Maschine als Generator verzögert wird, wodurch sich die Bremskraft einer Fahrzeugbremsanlage zur Erzielung einer gewünschten Verzögerung entsprechend verringert.

Ein weiterer Vorteil ist bei Anschluss einer schlupfgeregelten Fahrzeugbremsanlage, dass sich der erste Kolben 3 wegen der Möglichkeit der Verschiebung des zweiten Kolbens 10 entgegen der Betätigungsrichtung und damit der Möglichkeit der Bremsflüssigkeitsaufnahme auch dann verschoben werden kann, wenn der Hauptbremszylinder 1 während einer Schlupfregelung durch Schließen nicht dargestellter Trennventile hydraulisch von der Fahrzeugbremsanlage getrennt wird. Der Hauptbremszylinder 1 benötigt deswegen keinen Pedalwegsimulator, wenn während einer Schlupfregelung das Bremsflüssigkeitsvolumen in ihm eingeschlossen ist, der Druckraum 2, dessen Volumen sich durch die Verschiebbarkeit des zweiten Kolbens 10 entgegen der Betätigungsrichtung vergrößern lässt, bildet in diesem Fall sozusagen einen Pedalwegsimulator.

Wird das nicht dargestellte Trennventil der Fahrzeugbremsanlage zur Rückförderung von Bremsflüssigkeit während einer Schlupfregelung geöffnet, dämpft der zweite Kolben 10 Druckschwingungen, er wirkt als Dämpfer. Solche Druckschwingungen werden von einer Hydropumpe erzeugt, die meist als Kolbenpumpe ausgebildet ist und als Rückförderpumpe während einer Schlupfregelung verwendet wird, aufgrund ihres pulsierenden Förderverhaltens. Außerdem entstehen Druckänderungen mit sehr großen Gradienten durch Öffnen und Schließen von Ein- und Auslassventilen, die Radbremsen zugeordnet sind und zu einer radindividuellen Radbremsdruckmodulation während einer Schlupfregelung eingesetzt werden. Diese Druckänderungen wirken auf den Hauptbremszylinder 1 und über den ersten- und Stangenkolben 3 zurück auf ein Bremspedal und sind dort deutlich und teilweise unangenehm spürbar. Die Dämpfung durch den zweiten Kolben 10 verringert die Rückwirkung und baut insbesondere Druckspitzen stark ab.

Wegen des zweiten Kolbens 10 lässt sich ein erster Kolben 3 mit kleinerem Durchmesser verwenden, der bei gegebener Pedalkraft einen höheren Bremsdruck erzeugt, weswegen der Hauptbremszylinder 1 ohne Bremskraftverstärker verwendbar ist. Weil der erste Kolben 3 den zweiten Kolben 10 nach Zurücklegen des vorgegebenen Verschiebewegs 3 in Bezug auf den zweiten Kolben 10 mitbewegt, verdrängt der Hauptbremszylinder 1 bei seiner Betätigung trotzdem ein ausreichendes Bremsflüssigkeitsvolumen zur Betätigung der angeschlossenen Fahrzeugbremsanlage, auch wenn eine elektrische Maschine eines mit der Fahrzeugbremsanlage ausgerüsteten Fahrzeugs nicht als Generator wirkt und das Fahrzeug deswegen ausschließlich mit der Fahrzeugbremsanlage verzögert werden muss.

Der zweite Kolben 10 schützt hydraulische Bauelemente der an den Hauptbremszylinder 1 angeschlossenen Fahrzeugbremsanlage vor Beschädigung durch einen Überdruck. Als Überdruck wird hier ein hydraulischer Druck bezeichnet, der so weit über einem maximalen Auslegedruck der Fahrzeugbremsanlage liegt, dass hydraulische Bauelemente der Fahrzeugbremsanlage durch den Druck beschädigt werden können. Der vorgegebene Verschiebeweg 20 zwischen dem ersten und dem zweiten Kolben 3, 10 ist so kurz, dass das dadurch verdrängte Bremsflüssigkeitsvolumen nicht ausreicht, um einen Bremsdruck über dem maximalen Auslegedruck zu erzeugen. Bewegt sich nach Überwinden des vorgegebenen Verschiebewegs 20 zwischen dem ersten und dem zweiten Kolben 3, 10 der zweite Kolben 10 mit dem ersten Kolben 3 mit, sind zur Druckerzeugung die Kolbenflächen beider Kolben 3, 10 wirksam, d.h. die wirksamen Kolbenflächen sind größer, im Ausführungsbeispiel doppelt so groß wie die Kolbenfläche des ersten Kolbens 3. Entsprechend ist der erzeugte Bremsdruck bei gegebener Pedalkraft niedriger. Die Kolbenflächen werden so groß gewählt, dass bei einer angenommen maximal möglichen Muskelkraft der erzeugte Druck den maximalen Auslegedruck der angeschlossenen Fahrzeugbremsanlage nicht übersteigt.

Durch die schwimmende Anordnung des zweiten Kolbens 10, d.h. seine Verschiebbarkeit in und entgegen der Betätigungsrichtung, herrscht stets ein Gleichgewichtszustand zwischen dem ersten Kolben 3 und dem zweiten Kolben 10: Der zweite Kolben 10 wird auf seiner Vorderseite mit dem Druck beaufschlagt, den der erste Kolben 3 erzeugt. Gegen diesen Druck stützt ihn die Stützfeder 17 ab, die Druckkraft und die Federkraft sind im Gleichgewicht. Dadurch entsteht kein sprungartiger Kraftanstieg beim Verschieben des ersten Kolbens 3 in der Betätigungsrichtung, wenn sein Mitnehmer 19 gegen den Kragen 11 des zweiten Kolbens 10 stößt, der zweite Kolben 10 wird "sanft" mitgenommen. Wenn der Mitnehmer 19 des ersten Kolbens 3 gegen den Kragen 11 des zweiten Kolbens 10 stößt, ändert sich nur ein Verhältnis zwischen der Muskelkraft zum Verschieben des ersten- und Stangenkolbens 3 und dem durch diese Kraft erzeugten Druck: Bei einer gegebenen Kraftänderung verringert sich der Druckanstieg, wenn sich der zweite Kolben 10 mit dem ersten Kolben 3 mitbewegt.

## Patentansprüche

1. Hauptbremszylinder für eine hydraulische Fahrzeugbremsanlage, mit einem ersten Kolben (3), der zur Erzeugung eines Bremsdrucks in einer Betätigungsrichtung im Hauptbremszylinder (1) verschiebbar ist, mit einem zweiten Kolben (10), der ebenfalls im Hauptbremszylinder (1) verschiebbar ist, der mit demselben Druck wie der erste Kolben (3) beaufschlagt wird und der denselben Bremskreis wie der erste Kolben (3) beaufschlagt, mit einer Mitnehmereinrichtung (11, 19), die den zweiten Kolben (10) nach einem vorgegebenen Verschiebeweg (20) des ersten Kolbens (3) in Bezug auf den zweiten Kolben (10) in der Betätigungsrichtung mit dem ersten Kolben (3) mitbewegt, **dadurch gekennzeichnet, dass** der zweite Kolben (10) über eine Ausgangsstellung hinweg entgegen der Betätigungsrichtung im Hauptbremszylinder (1) verschiebbar ist und dass der Hauptbremszylinder (1) eine Stützfeder (17) für den zweiten Kolben (10) aufweist, die den zweiten Kolben (10) gegen eine Verschiebung im Hauptbremszylinder (1) entgegen der Betätigungsrichtung abstützt.

2. Hauptbremszylinder nach Anspruch 1, **dadurch gekennzeichnet, dass** eine Rückseite des zweiten Kolbens (10) drucklos ist.

3. Hauptbremszylinder nach Anspruch 1, **dadurch gekennzeichnet, dass** der zweite Kolben (10) rohrförmig ist.

4. Hauptbremszylinder nach Anspruch 1, **dadurch gekennzeichnet, dass** der zweite Kolben (10) eine Lochscheibe (12) aufweist, deren eine Lochscheibenförmige Stirnseite druckbeaufschlagt ist und zur Druckerzeugung dient, wenn die Mitnehmereinrichtung (11, 19) den zweiten Kolben (10) mit dem ersten Kolben (3) mitbewegt.

5. Hauptbremszylinder nach Anspruch 1, **dadurch gekennzeichnet, dass** der erste Kolben (3) und der zweite Kolben (10) mit demselben Durchmesser verschiebbar im Hauptbremszylinder (1) geführt sind.

## Claims

1. Brake master cylinder for a hydraulic vehicle brake system, having a first piston (3) which can be displaced in the brake master cylinder (1) in an actuating direction in order to generate a brake pressure, having a second piston (10) which can likewise be displaced in the brake master cylinder (1), is loaded with the same pressure as the first piston (3), and loads the same brake circuit as the first piston (3), having a driver device (11, 19) which moves the second piston (10) together with the first piston (3) in the actuating direction after a predefined displacement travel (20) of the first piston (3) in relation to the second piston (10), **characterized in that** the second piston (10) can be displaced in the brake master cylinder (1) counter to the actuating direction beyond a starting position, and **in that** the brake master cylinder (1) has a supporting spring (17) for the second piston (10), which supporting spring (17) supports the second piston (10) against a displacement in the brake master cylinder (1) counter to the actuating direction.

2. Brake master cylinder according to Claim 1, **characterized in that** a rear side of the second piston (10) is pressureless.

3. Brake master cylinder according to Claim 1, **characterized in that** the second piston (10) is tubular.

4. Brake master cylinder according to Claim 1, **characterized in that** the second piston (10) has a perforated disc (12), the one perforated disc-shaped end side of which is pressure-loaded and serves for pressure generation when the driver device (11, 19) moves the second piston (10) together with the first piston (3).

5. Brake master cylinder according to Claim 1, **characterized in that** the first piston (3) and the second piston (10) are guided with the same diameter displaceably in the brake master cylinder (1).

## Revendications

1. Maître-cylindre de frein pour un système de freinage hydraulique de véhicule, comprenant un premier piston (3) qui est déplaçable dans un sens d'actionnement dans le maître-cylindre de frein (1) pour générer une pression de freinage, comprenant un deuxième piston (10) qui est également déplaçable dans le maître-cylindre de frein (1), qui est sollicité par la même pression que le premier piston (3) et qui sollicite le même circuit de freinage que le premier piston (3), comprenant un dispositif d'entraînement (11, 19) qui déplace le deuxième piston (10) conjointement avec le premier piston (3) dans le sens d'actionnement après une course de déplacement prédéfinie (20) du premier piston (3) par rapport au deuxième piston (10), **caractérisé en ce que** le deuxième piston (10) est déplaçable dans le maître-cylindre de frein (1) en sens inverse au sens d'actionnement au-delà d'une position de départ, et **en ce que** le maître-cylindre de frein (1) comprend un ressort de support (17) pour le deuxième piston (10), lequel ressort de support supporte le deuxième piston (10) contre un déplacement dans le maître-cylindre de frein (1) en sens inverse au sens d'actionnement.

2. Maître-cylindre de frein selon la revendication 1, **caractérisé en ce qu'**un côté arrière du deuxième piston (10) est sans pression.

3. Maître-cylindre de frein selon la revendication 1, **caractérisé en ce que** le deuxième piston (10) est tubulaire.

4. Maître-cylindre de frein selon la revendication 1, **caractérisé en ce que** le deuxième piston (10) comprend un disque perforé (12), dont un côté frontal en forme de disque perforé est sollicité par une pression et sert à générer une pression lorsque le dispositif d'entraînement (11, 19) déplace le deuxième piston (10) conjointement avec le premier piston (3).

5. Maître-cylindre de frein selon la revendication 1, **caractérisé en ce que** le premier piston (3) et le deuxième piston (10) sont guidés avec le même diamètre de manière déplaçable dans le maître-cylindre de frein (1).
